# EUROPÄISCHE PATENTSCHRIFT

(11) **EP 1 124 895 B1**
(45) Veröffentlichungstag und Bekanntmachung des Hinweises auf die Patenterteilung: **19.05.2004**
(21) Anmeldenummer: 99947349.9
(22) Anmeldetag: 14.09.1999
(51) Int. Cl.: C08K 9/04, C08K 9/06

(54) **OBERFLÄCHENMODIFIZIERTE FÜLLSTOFFZUSAMMENSETZUNG**
SURFACE-MODIFIED FILLING MATERIAL COMPOSITION
COMPOSITION DE CHARGE MODIFIEE EN SURFACE

(30) Priorität: 14.09.1998 EP 98117342
(43) Veröffentlichungstag der Anmeldung: 22.08.2001
(73) Patentinhaber: ALBEMARLE CORPORATION, Baton Rouge, LA 70801-1765 (US)
(72) Erfinder: EICHLER, Hans-Jürgen, D-50189 Elsdorf (DE); PALMER, Michael, D-50126 Bergheim (DE); HERBIET, René, B-4700 Eupen (BE)
(74) Vertreter: UEXKÜLL & STOLBERG
(86) Internationale Anmeldenummer: PCT/EP1999/006809
(87) Internationale Veröffentlichungsnummer: WO 2000/015710

(56) Entgegenhaltungen:
- EP-A- 0 227 139
- US-A- 4 525 494
- US-A- 4 853 154

## Beschreibung

Die Erfindung betrifft eine oberflächenmodifizierte Füllstoffzusammensetzung, deren Verwendung zur Flammfestausrüstung von thermoplastischen, duroplastischen oder elastomeren Kunststoffen, sowie die daraus hergestellten flammgeschützten Kunststoffe

Flammhemmende Füllstoffe, wie z B Magnesium- oder Aluminiumhydroxid, werden zwecks Verbesserung des Eigenschaftsprofils der mit diesen Füllstoffen hergestellten Kunststoffmischungen häufig oberflächenmodifiziert Dies konnte z B mit Salzen von Fettsäuren gemäss DE-A-26 59 933, mit Säuregruppen enthaltenden Polymeren gemäss EP-A-292 233, mit Ethylen-Propylen-Copolymeren EPDM oder Ethylen-Propylen-Terpolymeren und weiteren Zusätzen gemäss EP-B-0 426 196 oder mit speziellen Fettsäurederivaten gemäss WO-A-96/26240 geschehen

Ein Nachteil der Beschichtungen aus dem Stand der Technik ist die fehlende Universalität. So ist z B. bei Beschichtungen gemäss der WO-A-96/26240 der Effekt hinsichtlich der Verbesserung mechanischer Eigenschaften und/oder der Brandeigenschaften bei einigen Kunststoffen, wie z B in EVA, sehr deutlich ausgeprägt, tritt aber bei anderen Systemen, wie z B. bei aliphatischen Polyketonen, entweder nur bedingt oder bei Kunststoffen wie z B Polyamiden praktisch nicht auf

Es stellte sich folglich die Aufgabe, oberflächenmodifizierte Füllstoffzusammensetzungen zu entwickeln, die die Nachteile aus dem Stand der Technik nicht beinhalten, also bei verbesserter Polymerverträglichkeit universeller einsetzbar sind und im Vergleich zum unbeschichteten Füllstoff verbesserte mechanische und rheologische Eigenschaften und / oder verbesserte Brandeigenschaften zeigen Insbesondere bestand die Aufgabe darin, oberflächenmodifizierte Füllstoffzusammensetzungen zu entwickeln, die im besonderen Masse für die Herstellung von Compounds für Kabelisolierungen geeignet sind.

Die Aufgabe konnte gelöst werden mit den oberflächenmodifizierten Füllstoffzusammensetzungen gemäss Anspruch 1

Erfindungsgemäss besteht die Oberflächenmodifizierung des halogenfreien flammhemmenden Füllstoffs aus einem oder mehreren Organotitanaten und/oder -zirkonaten und einem Siloxanderivat

Als halogenfreie flammhemmende Füllstoffe werden Hydroxide des Aluminiums und / oder Hydroxide des Magnesiums, gegebenenfalls in Mischung mit Oxiden des Aluminiums, des Magnesiums, des Titans, des Siliciums oder des Zirkoniums oder mit weiteren Füllstoffmaterialien, wie z. B. Calciumcarbonat, Talkum oder calcinierte oder nicht calcinierte Tone, eingesetzt.

Geeignete Hydroxide des Aluminiums sind z B natürliche Al(OH)₃-haltige Materialien wie z B Hydrargillit oder Gibbsit, (AlO(OH)_{X})-haltige Materialien wie z B das Böhmit, oder synthetische Aluminiumhydroxide wie sie z B unter dem Warenzeichen MARTIFIN® oder MARTINAL® von der Alusuisse Martinswerk GmbH in Bergheim (Deutschland) vertrieben werden.

Geeignete Hydroxide des Magnesiums sind z B. natürliche Mg(OH)₂-Typen wie z B das Brucit oder Seewasser-Typen, natürliche Magnesiumhydroxycarbonate wie z B Dawsonit, Huntit oder Hydromagnesit, oder synthetische Magnesiumhydroxide wie sie z B unter dem Warenzeichen MAGNIFIN® von der Magnifin GmbH in Breitenau (Österreich) vertrieben werden Als Oxide des Aluminiums, des Magnesiums, des Titans oder des Zirkoniums können die handelsüblichen Oxide verwendet werden Je nach gefordertem Eigenschaftsprofil im Kunststoff wird ein Hydroxid des Aluminiums und / oder ein Hydroxid des Magnesiums alleine oder in beliebigen Mischungsverhältnissen mit den genannten Oxiden eingesetzt

Gemäss einer Ausführungsform der Erfindung kann die Füllstoffzusammensetzung ausserdem ein Melaminderivat und/oder ein Guanaminderivat enthalten Diese Zusätze können zu einer weiteren Verbesserung des Flammschutzes beitragen

Geeignete Derivate des Melamins sind z B das Melamincyanurat/Melaminisocyanurat oder das Melamindiborat. Ein geeignetes Derivat des Guanamins ist z B das Acetoguanamincyanurat

Zum Zweck der besseren Aufbringung kann das Melaminderivat und/oder Guanaminderivat in eine geeignete Trägersubstanz aufgenommen werden. Solche Trägersubstanzen können ausgewählt werden aus Polymeren, deren Schmelzpunkte möglichst unter 150 °C liegen, aus einem geeigneten leicht flüchtigen organischen Lösungsmittel, welches bei der weiteren Verarbeitung durch Verdampfen entfernt werden kann, oder aus den erfindungsgemäss verwendeten Organotitanaten und / oder -zirkonaten und einem Siloxanderivat

Zweckmässig gelangt das Melaminderivat und/oder Guanaminderivat in einer Menge von 0,01 bis 25 Teilen, vorzugsweise von 0,5 bis 15 Teilen pro 100 Teilen halogenfreier flammhemmender Füllstoff zum Einsatz.

Geeignete Organotitanate und / oder -zirkonate sind z B solche, wie sie in der Firmenschrift "Ken-React reference manual", Bulletin KR-1084-2 der Kenrich Petrochemicals Inc beschrieben sind oder z B von der Fa DuPont unter dem Handelsnamen TYZOR® vertrieben werden.

### Geeignete Organotitane bzw Organozirkonate sind beispielsweise

Titan tetra-2-ethylhexanoat, Titan tetrabutanolat, Tetraisopropyl titanat, Triethanolaminzirkonat, Tetra-n-propyl-zirkonat, Tetra-n-butyl-zirkonat, Diethylcitrat Chelat-zirkonat, (Triisostearyl-isopropyl-titanat), Tris-isooctadecanoato-O-titan (IV)-2-propanolat,
Isooctadecanoato-O-2-propanolato-titan (IV) bis-2-methyl-2-propenoat,
Tris (dodecyl) benzosulfonato-O-titan (IV) 2-propanolat,
Tris (dioctyl) phosphato-O-titan (IV) 2-propanolat,
Bis (dodecyl)benzosulfonato-O-2-propanolato-titan (IV) (4-amino) benzolsulfonat,
Methoxydiglycolato-O-titan (IV) tris(2-methyl)-2-propenoat,
Tris (dioctyl) pyrophosphato-O-titan (IV) 2-propanolat,
Methoxydiglycolato-O-titan (IV) tris (2-propenoat),
Tris (3,6-diaza) hexanolato-titan (IV)-2-propanolat,
Oxoethylendiolato-titan (IV) bis [4-(2-phenyl)-2-propyl-2] phenolat,
Titan (IV) bis(dioctyl) pyrophosphato-O-oxoethylendiolat, Addukt mit (Dioctyl-Ohydrogenphosphit),
Tris-(2-methyl)-2-propenoato-O-titan (IV) oxoethylendiolat,
Titan (IV) bis (butyl,methyl) pyrophosphato-O-oxoethylen-diolat, Addukt mit Bis(dioctyl)-hydrogenphosphit,
Ethylendiolato-O-titan (IV) bis (dioctyl) phosphat,
Ethylendiolato-O-titan (IV) bis (dioctyl) pyrophosphat, Addukt mit Bis(dioctyl)-hydrogenphosphit,
Ethylendiolato-O-titan (IV) bis (butyl,methyl) pyrophosphat, Addukt mit Bis(dioctyl)-hydrogenphosphit,
Oxoethylendiolato-titan (IV) bis (dioctyl) pyrophosphat, Addukt mit 2 Mol 2-N,N-Dimethylamino-2-methylpropanol,
Methylpyrophosphato-O-titan (IV) bis (butyl), Addukt mit 2 Mol 2-N,N-Dimethylamino-2-methylpropanol,
Bis (dioctyl) pyrophosphato-O-titan (IV) ethylendiolat-bis-(triethyl)amin-Salz,
Bis (dioctyl) pyrophosphato-O-bis(dialkyl) aminoalkyl-2-methylpropenoat-titan (IV) ethylendiolat,
Ethylendiolato-O-titan (IV) bis (dioctyl) pyrophosphat, Addukt mit 2 Mol Acrylato-O-amin,
Ethylendiolato-O-titan (IV) bis (dioctyl) pyrophosphat, Addukt mit 2 Mol 2-Methylpropenoamido-N-amin,
Methylpyrophosphato-ethylendiolato-titan (IV) bis (butyl)-bis (dialkyl)aminoalkylacrylat-Salz,
Bis (dioctyl) pyrophosphato-O-titan (IV) (bis-2-propenolat-methyl)-2-butanolat, Addukt mit 3 Mol N,N-Dimethylamino-alkylpropenoamid,
Bis (dioctyl) pyrophosphato-O-zirkonium (IV) 2,2-dimethyl-1,3-propandiolat, Addukt mit 2 Mol N,N-Dimethylamino-alkylpropenoamid,
Cyclo-bis-2-dimethylaminopyrophosphato-O,O-zirkonium (IV) (2-ethyl, 2-propenolatomethyl) 1,3-propandiolat, Addukt mit 2 Mol Methansulfonsäure,
Titan (IV) tetrakis-2-propanolat, Addukt mit 2 Mol (Dioctyl) hydrogenphosphat,
Titan (IV) tetrakis octanolat, Addukt mit 2 Mol (Di-tridecyl) hydrogenphosphit,
Methylbutanolato-titan (IV) tetrakis (bis-2-propenolat), Addukt mit 2 Mol (Di-tridecyl)-hydrogenphosphit,
Zirkonium (IV) tetrakis-2,2-(bis-2-propenolatomethyl) butanolat, Addukt mit 2 Mol Ditridecylhydrogenphosphit,
Tris-neodecanolato-O-titan (IV) 2,2-(bis-3-propenolatomethyl)butanolat,
Tris (dodecyl) benzolsulfonato-O-titan (IV) 2,2-(bis-2-propenolatomtehyl)butanolat,
Tris (dioctyl) phosphato-O-titan (IV) 2,2-(bis-2-propenolatomethyl)butanolat,
Tris (dioctyl) pyrophosphato-O-titan (IV) 2,2-(bis-2-propenolatomethyl)butanolat,
Tris (2-ethylendiamino ethylato-titan (IV) 2,2-(bis-2-propenolatomethyl)butanolat,
Tris (3-amino) phenylato-titan (IV) 2,2-(bis-2-propenolatomethyl)butanolat,
Tris (6-hydroxy) hexanoato-O-titan (IV) 2,2-(bis-2-propenolatomethyl)butanolat,
Cyclo (dioctyl) pyrophosphato-O,O-titan (IV) bis-octanolat,
Titan (IV) bis-cyclo (dioctyl) pyrophosphat,
Cyclo-di-2,2-(bis-2-propenolatomethyl) butanolato-pyrophosphato-O,O-zirkonium (IV) 2-ethyl, 2-propenolatomethyl-1,3-propandiolat,
Cyclo (di-2-ethylhexyl) pyrophosphato-zirkonium (IV) bis-2-ethylhexanolat,
Tris-neodecanolato-O-zirkonium (IV) 2,2-(bis-2-propenolatomethyl)butanolat,
Tris (dodecyl) benzolsulfonato-O-zirkonium (IV) 2,2-(bis-2-propenolatomethyl)butanolat,
Tris (dioctyl) phosphato-O-zirkonium (IV) 2,2-(bis-2-propenolatomethyl)butanolat, tris-2-methyl-2-propenolato-O-zirkonium (IV) 2,2-(bis-2-propenolatomethyl)butanolat,
Tris (dioctyl) pyrophosphato-O-zirkonium (IV) 2,2-(bis-2-propenolatomethyl)butanolat,
Tris-2-propenolato-O-zirkonium (IV) 2,2-(bis-2-propenolato)butanolat,
Tris (2-ethylendiamino) ethylato-zirkonium (IV) 2,2-(bis-2-propenolatomehtyl)butanolat,
Bis-(9,10-11,12-diepoxy)octadecanoato-O-zirkonium (IV) bis-(2,2-dimethyl)-1,3-propandiolat, zirkonium (IV) 2-ethyl-2-propenolatomethyl-1,3-propandiolat-bis-mercaptophenylat,
Tris (2-amino) phenylato-zirkonium (IV) 1,1-(bis-2-propenolatomethyl)butanolat

Diese Verbindungen können einzeln oder als Mischung verwendet werden

Bevorzugte Organotitanate und/oder -zirkonate sind z B das Titan tetra-2-ethylhexanoat, das Tris-isooctadecanoato-O-titan (IV)-2-propanolat, das (Triisostearyl isopropyl titanat), das Titan tetrabutanolat und das Tetraisopropyl titanat, das Triethanolamin zirkonat, das Tetra-npropyl zirkonat, das Tetra-n-butyl zirkonat und das Diethylcitrat Chelat-zirkonat.

Die Organotitanate und / oder -zirkonate werden zweckmässig in einer Menge von 0,01 bis 10 Teilen, vorzugsweise von 0,1 bis 5 Teilen pro 100 Teilen halogenfreier flammhemmender Füllstoff eingesetzt

Zum Zweck der Optimierung der mechanischen Eigenschaften, wie z B der Zugfestigkeit, der Reißdehnung und des Elastizitätsmoduls, kann das Organotitanat und / oder -zirkonat in Kombination mit einem geeigneten Silan verwendet werden

Zweckmässig werden solche Silane verwendet, wie sie z B in der DE-A-27 43 682 beschrieben sind oder aus dem Firmenprospekt der Hüls AG Marl, "Lieferprogramm Silane-Kieselsäureester-Metallsäureester,-chelate", Febr 1994, hervorgehen Bevorzugt werden Vinylsilane wie z B Vinyltriethoxysilan oder Vinyltrimethoxysilan, Aminosilane, wie z B N-Methyl-3-aminopropyl-trimethoxysilan, Methacrylsilane wie z B (Methacryloyloxypropyl)-trimethoxysilane, Epoxysilane wie z.B 3-Glycidyloxypropyl-trimethoxysilan, oder Alkylsilane wie z B Propyltriethoxysilan eingesetzt.

### Gegebenenfalls kann auch eine Mischung der genannten Silane eingesetzt werden

Üblicherweise gelangt das Silan in einer Menge von 0,01 bis 10 Teilen, vorzugsweise von 0,5 bis 5 Teilen pro 100 Teilen halogenfreier flammhemmender Füllstoff zum Einsatz

Erfindungsgemäss wird der halogenfreie flammhemmende Füllstoff zusätzlich mit einem Siloxanderivat behandelt. Zweckmässig wird als Siloxanderivat ein Polysiloxan eingesetzt Geeignete Polysiloxane sind die Oligoalkylsiloxane, die Polydialkylsiloxane, wie z. B. das Polydimethylsiloxan oder Polydiethylsiloxan, die Polyalkylarylsiloxane, wie z B das Polyphenylmethylsiloxan, oder die Polydiarylsiloxane, wie z. B das Polyphenylsiloxan. Die genannten Siloxane können mit reaktionsfähigen Gruppen wie z B. Hydroxy, Amino, Vinyl, Acryl, Methacryl, Carboxy oder Glycidyl funktionalisiert sein

Bevorzugt werden hochmolekulare Polydialkylsiloxane, die gegebenenfalls mit den oben genannten funktionellen Gruppen modifiziert sind, eingesetzt.

Gegebenenfalls können Mischungen der genannten Siloxanderivate eingesetzt werden Das Siloxanderivat wird in der Regel in einer Menge von 0,01 bis 20 Teilen, vorzugsweise von 0,05 bis 10 Teilen pro 100 Teilen halogenfreier flammhemmender Füllstoff eingestezt

Zur Oberflächenmodifizierung wird der halogenfreie flammhemmende Füllstoff zweckmässig in einem geeigneten Mischer, vorzugsweise in einem Mischer, der hohe Scherkräfte ermöglicht, mit den oben erwähnten Coagenzien versehen Die Zugabezeiten bzw -reihenfolgen und die Prozeßtemperaturen sind dabei der Reaktivität der Coagenzien mit der Füllstoffoberfläche anzupassen Es ist ebenso möglich, eine Vormischung der Coagenzien zusammen mit dem halogenfreien flammhemmenden Füllstoff dem Mischer zuzuführen

Vorteilhaft kann auch zunächst ein Additivkonzentrat, ein sogenanntes Masterbatch, hergestellt werden, indem nur eine Teilmenge des Füllstoffes mit den betreffenden Coagenzien gemäss dem genannten Verfahren in einem Mischer mit hohen Scherkräften vermischt wird Dieses sogenannte Masterbatch kann dann auf einfache Weise mit einem technisch weniger aufwendigen Mischaggregat, z B beim Kunden, mit der entsprechenden Menge zusätzlichen Füllstoffes verdünnt und zum einsatzbereiten oberflächenmodifizierten Füllstoff verarbeitet werden

Der auf diese Weise modifizierte halogenfreie flammhemmende Füllstoff kann anschliessend mit dem gewünschten Polymer nach gängigen Methoden zu einem Compound verarbeitet werden Als Compoundieraggregate bieten sich dafür handelsübliche Mischaggregate an, wie z. B. Ein- oder Doppel-Schneckenkneter, Ko-Kneter, Innenmischer oder ein FCM (farrel continuous mixer)

Der erfindungsgemäss oberflächenbehandelte halogenfreie flammhemmende Füllstoff ist für die Flammfestausrüstung von Thermoplasten, Duroplasten oder Elastomeren geeignet Aus der Reihe der Thermoplaste sind z B. Polyethylen und seine Copolymere, Polypropylen, EVA und seine Copolymere, EEA und seine Copolymere, Polyamid und seine Copolymere, aliphatische Polyketone oder Polyester geeignet Als Elastomere kommen z B Kautschuke wie EPM, EPDM, SBR, Chloropren- und Nitrilkautschuk in Betracht

Der Gehalt an oberflächenbehandeltem Füllstoff in der betreffenden Polymermatrix bewegt sich, abhängig von dem gewünschten Grad an Flammfestigkeit, in der Regel zwischen 5 und 90% Gew.-%, vorzugsweise zwischen 20 bis 70% Gew -%, bezogen auf das gefüllte Polymer

Bevorzugt werden die oberflächenbehandelten halogenfreien flammhemmenden Füllstoffe in den genannten Thermoplasten, insbesondere in EVA, EEA, PE, PP, PA und aliphatischen Polyketonen, eingesetzt

Je nach gefordertem Eigenschaftsprofil können den genannten Füllstoffen ein oder mehrere Oxide des Aluminiums, des Magnesiums, des Titans des Siliciums oder des Zirkoniums zugemischt werden, um z B. Abriebverhalten, Härte oder Bewitterungsverhalten zu steuern

Die genannten Füllstoff-enthaltenden Compounds können zusätzlich faserförmige Verstärkerstoffe enthalten Zu den Faserstoffen zählen beispielsweise Glasfasern, Steinfasern, Metallfasern, polykristalline keramische Fasern, einschliesslich der Einkristalle, den sogenannten "whiskers", ebenso alle aus synthetischen Polymeren herrührenden Fasern, wie z. B. Aramid-, Kohlenstoff-, Polyamid-, Polyacryl-, Polyester- und Polyethylen-Fasern

Falls gewünscht, können die Compounds mit geeigneten Pigmenten und / oder Farbstoffen oder mit weiteren anwendungsbezogenen Zusätzen oder Hilfsstoffen versehen sein

### Beispiele

Den einzelnen, in den nachfolgenden Beispielen aufgeführten physikalischen Messmethoden liegen folgende Standards und Normen zu Grunde:

| | |
|---|---|
| Melt flow index (MFI) | DIN 53 735 |
| Zugfestigkeit: | DIN 53 455 |
| Elastizitätsmodul: | DIN 53 457 |
| Reissdehnung: | DIN 53 455 |
| Schlagzähigkeit: | DIN 53 453 |
| Spez. Durchgangswiderstand | DIN 53 482 |
| Lowest oxygen index (LOI) | ASTM D 28 63 |
| UL 94 | Brandverhalten gemäss Standard der Underwriter Laboratorien |

### Beispiel 1

Als Füllstoff wurde zunächst 1000 g unbeschichtetes MAGNIFIN® H5 (Magnifin GmbH, A-Breitenau) mit einer mittleren spezifischen Oberfläche nach BET von 5 m²/g in einem Heiz-Kühl-Intensivmischer mit 0.8 % (8 g ) eines Organotitanates (Titan tetrabutanolat von Du Pont) während 40 min beschichtet. Nach dem Abkühlvorgang im Kühlmischer auf nahezu 40 °C erfolgte eine weitere Beschichtung mit 0,2 % (2 g) eines Polysiloxans (SFR100 von General Electric) und 0,3 % (3 g) eines Aminosilans (N-Mcthyl-3-aminopropyl-trimethoxysilan von Hüls) bis zum Erreichen der Austragstemperatur von 65°C in den Kühlmischer.

Der beschichtete Füllstoff wurde anschliessend in einem Buss Ko-Kneter in EVA (Escorene Ultra UL00119 von EXXON) zusammen mit 0.3 % Irganox 1010 eingemischt, so dass der Füllstoffgehalt 60 % betrug. Zum Vergleich wurde ebenfalls das unbeschichtete MAGNIFIN® H5 sowie der nur mit einem Aminosilan beschichtete Füllstoff MAGNIFIN® H5IV mit gleichem Füllstoffgehalt eingemischt. Tabelle 1 zeigt die Ergebnisse hinsichtlich der rheologischen, mechanischen und elektrischen Eigenschaften sowie des Flammschutzes.

**Tabelle 1**

| | **Füllstoffe in EVA** | | |
|---|---|---|---|
| **Eigenschaft** | **H5 Vergleich** | **H5IV Vergleich** | **Erfindung** |
| **MFI 190°C/10 kg** **(g/10 min)** | 0.9 | 0.8 | 2.6 |
| **Zugfestigkeit** **(MPa)** | 11.5 | 13 | 13.1 |
| **Reißdehnung** **(%)** | 100 | 176 | 412 |
| **Spez. Widerst. nach 28 d bei 50°C** **(Ω cm)** | 10¹¹ | 10¹³ | 10¹⁴ |
| **LOI** **(% O**_{**2**}**)** | 41 | 44 | 61 |

### Beispiel 2

Als Füllstoff wurde 1000 g unbeschichtetes MAGNIFIN® H5 (Magnifin GmbH, A-Breitenau) in einem Heiz-Kühl-Intensivmischer mit 1.0 % (10 g ) eines Organotitanates (Titan tetrabutanolat von Du Pont) während 30 min beschichtet. Nach dem Abkühlvorgang im Kühlmischer auf nahezu 40 °C erfolgte bei dieser Temperatur eine weitere Beschichtung mit 3.0 % (30 g) eines Polysiloxans (SFR100 von General Electric).

Der beschichtete Füllstoff wurde anschliessend in einem Buss Ko-Kneter in einem aliphatischen Polyketon (Carilon DP/R 1000-1000 von SHELL) eingemischt, so dass der Füllstoffgehalt 30 % betrug. Zum Vergleich wurde ebenfalls das unbeschichtete MAGNIFIN® H5 sowie der nur mit einem Aminosilan beschichtete Füllstoff MAGNIFIN® H5IV mit gleichem Füllstoffgehalt eingemischt. Tabelle 2 zeigt die Ergebnisse hinsichtlich der mechanischen Eigenschaften, der Schlagzähigkeit und des Flammschutzes.

**Tabelle 2**

| | **Füllstoffe in aliphatischem Polyketon** | | |
|---|---|---|---|
| **Eigenschaft** | **H5 Vergleich** | **H5IV Vergleich** | **Erfindung** |
| **E-Modul** **(MPa)** | 2501 | 2794 | 2498 |
| **Zugfestigkeit** **(MPa)** | 41 | 56 | 42 |
| **Reißdehnung** **(%)** | 3.0 | 6.4 | 30 |
| **Schlagzähigkeit** **(kJ/m**^{**2**}**)** | mit Bruch 20.8 | mit Bruch 72 | ohne Bruch |
| **UL94 V** | V2 | nicht erreicht | V1 |
| **LOI** **(% O**_{**2**}**)** | 30 | 30 | 32 |

### Beispiel 3

Als Füllstoff wurde 1000 g unbeschichtetes MAGNIFIN® H5 (Magnifin GmbH, A-Breitenau) in einem Heiz-Kühl-Intensivmischer mit 0.5 % (5 g) eines Organotitanates (Isopropyl triisostearoyl titanat von Ken-React) und 0.3 % eines Aminosilans (N-Methyl-3-aminopropyl-trimethoxysilan von Hüls) während 10 min beschichtet. Nach dem Abkühlvorgang im Kühlmischer auf nahezu Raumtemperatur erfolgte eine weitere Beschichtung mit 4.0 % (40 g) eines Polysiloxans (Baysilon MH15 von Bayer), das gleichzeitig als Trägersubstanz für das Melamincyanurat (Plastisan B von 3 V, ebenfalls 4.0 %) fungiert.

Der beschichtete Füllstoff wurde anschliessend in einem Buss Ko-Kneter in PA 12 (Vestamid L1670 von HÜLS) eingemischt, so dass der Füllstoffgehalt 60 % betrug. Zum Vergleich wurde ebenfalls das unbeschichtete MAGNIFIN® H5 sowie der nur mit einem Aminosilan beschichtete Füllstoff MAGNIFIN® H5IV mit gleichem Füllstoffgehalt eingemischt. Tabelle 3 zeigt die Ergebnisse hinsichtlich des Flammschutzes.

**Tabelle 3**

| **Füllstoff** | **PA + H5 Vergleich** | **PA + H5IV Vergleich** | **Erfindung** |
|---|---|---|---|
| **LOI** **(% O**_{**2**}**)** | 48 | 43 | 62 |

### Beispiel 4

Als Füllstoff wurde 1000 g unbeschichtetes MAGNIFIN® H5 (Magnifin GmbH, A-Breitenau) in einem Heiz-Kühl-Intensivmischer mit 1,5 % (15 g) eines Organotitanates (Isopropyl triisostearoyl titanat von Ken-React) während 10 min beschichtet. Nach dem Abkühlvorgang im Kühlmischer auf nahezu Raumtemperatur erfolgte eine weitere Beschichtung mit 0.5 % (5 g) eines Polysiloxans (Baysilon MH15 von Bayer)

Der beschichtete Füllstoff wurde anschliessend in einem Buss Ko-Kneter in Polypropylen (Novolen 3200 H von BASF) eingemischt, so dass der Füllstoffgehalt 65 % betrug. Zum Vergleich wurde ebenfalls das unbeschichtete MAGNIFIN® H5 mit gleichem Füllstoffgehalt eingemischt. Tabelle 4 zeigt die Ergebnisse hinsichtlich der rheologischen und mechanischen Eigenschaften.

**Tabelle 4**

| | **Füllstoffe in Polypropylen** | |
|---|---|---|
| **Eigenschaft** | **H5 Vergleich** | **Erfindung** |
| **MFI 230°C/5 kg** **(g/10 min)** | nicht messbar | 8.1 |
| **E-Modul** **(MPa)** | 3295 | 1623 |
| **Zugfestigkeit** **(MPa)** | 20.2 | 13.1 |
| **Reißdehnung** **(%)** | 1.1 | 142 |
| **Schlagzähigkeit** **(kJ/m**^{**2**}**)** | mit Bruch | ohne Bruch |

### Beispiel 5

Als Füllstoff wurde zunächst 1000 g unbeschichtetes MARTINAL® OL-104/LE (Alusuisse Martinswerk GmbH, D-Bergheim) mit einer mittleren spezifischen Oberfläche nach BET von 4 m²/g in einem Heiz-Kühl-Intensivmischer mit 1.0 % (10 g ) eines Organotitanates (Isopropyl triisostearoyl titanat von Ken-React) während 30 min beschichtet. Nach dem Abkühlvorgang im Kühlmischer auf nahezu 40 °C erfolgte eine weitere Beschichtung mit 0,5 % (5 g) eines Polysiloxans (AK 350 von Wacker) bis zum Erreichen der Austragstemperatur von 65 °C in den Kühlmischer.

Der beschichtete Füllstoff wurde anschliessend in einem Buss Ko-Kneter in EVA (Escorene Ultra UL00119 von EXXON) zusammen mit 0.3 % Irganox 1010 eingemischt, so dass der Füllstoffgehalt 60 % betrug. Zum Vergleich wurde ebenfalls das unbeschichtete MARTINAL® OL-104/LE sowie der nur mit einem Aminosilan beschichtete Füllstoff MARTINAL® OL-104/I mit gleichem Füllstoffgehalt eingemischt. Tabelle 5 zeigt die Ergebnisse hinsichtlich der rheologischen und der mechanischen Eigenschaften. Der Vorteil besteht in dem günstigeren Fließverhalten (höherer MFI) und der hohen Reißdehnung von hier 431%.

**Tabelle 5**

| | **Füllstoffe in EVA** | | |
|---|---|---|---|
| **Eigenschaft** | **OL-104/LE Vergleich** | **OL-104/I Vergleich** | **Erfindung** |
| **MFI 190/10** **(g/10 min)** | 1.5 | 1.3 | 2.0 |
| **Zugfestigkeit** **(MPa)** | 10.1 | 13.1 | 7.7 |
| **Reißdehnung** **(%)** | 135 | 207 | 431 |

## Patentansprüche

1. Oberflächenmodifizierte Füllstoffzusammensetzung für thermoplastische, duroplastische oder elastomere Kunststoffe, umfassend einen halogenfreien flammhemmenden Füllstoff, der mit einem oder mehreren Organo-titanaten und / oder -zirkonaten und einem Siloxanderivat oberflächenbehandelt ist

2. Füllstoffzusammensetzung nach Anspruch 1, **dadurch gekennzeichnet, dass** zusätzlich ein Melaminderivat und / oder ein Guanaminderivat enthalten ist

3. Füllstoffzusammensetzung nach Anspruch 2, **dadurch gekennzeichnet, dass** das Melaminderivat und / oder das Guanaminderivat in einer Menge von 0,01 bis 25 Teilen pro 100 Teilen halogenfreier flammhemmender Füllstoff enthalten ist

4. Füllstoffzusammensetzung nach einem der Ansprüche 1 bis 3, **dadurch gekennzeichnet, dass** das Organotitanat und / oder -zirkonat in einer Menge von 0,01 bis 10 Teilen pro 100 Teilen halogenfreier flammhemmender Füllstoff enthalten ist

5. Füllstoffzusammensetzung nach einem der Ansprüche 1 bis 4, **dadurch gekennzeichnet, dass** das Organotitanat und / oder -zirkonat in Kombination mit einem Silan enthalten ist.

6. Füllstoffzusammensetzung nach Anspruch 5, **dadurch gekennzeichnet, dass** das Silan in einer Menge von 0,01 bis 10 Teilen pro 100 Teilen halogenfreier flammhemmender Füllstoff enthalten ist

7. Füllstoffzusammensetzung nach einem der Ansprüche 1 bis 6, **dadurch gekennzeichnet, dass** das Siloxanderivat in einer Menge von 0,01 bis 20 Teilen pro 100 Teilen halogenfreier flammhemmender Füllstoff enthalten ist.

8. Füllstoffzusammensetzung nach einem der Ansprüche 1 bis 7, **dadurch gekennzeichnet**, das als halogenfreier flammhemmender Füllstoff ein oder mehrere Hydroxide des Aluminiums und / oder ein oder mehrere Hydroxide des Magnesiums, gegebenenfalls in Mischung mit einem oder mehreren Oxiden des Aluminiums, des Magnesiums, des Titans, des Siliciums oder des Zirkoniums oder mit weiteren Füllstoffmaterialien enthalten sind

9. Verwendung einer oberflächenmodifizierten Füllstoffzusammensetzung gemäss einem der Ansprüche 1 bis 8 als halogenfreier flammhemmender Füllstoff in einer Menge von 5 Gew.% bis 90 Gew % in einem Thermoplast, einem Duroplast oder einem Elastomer

10. Thermoplast, Duroplast oder Elastomer enthaltend eine oberflächenmodifizierte Füllstoffzusammensetzung gemäss einem der Ansprüche 1 bis 8

## Claims

1. Surface-modified filler composition for thermoplastic, thermoset or elastomeric plastics comprising a halogen-free flame-retardant filler that has been surface treated with one or more organotitanates and/or organozirconates and a siloxane derivative.

2. Filler composition according to Claim 1 **characterised in that** it additionally comprises a melamine derivative and/or a guanamine derivative.

3. Filler composition according to Claim 2 **characterised in that** the quantity of melamine derivative and/or guanamine derivative is from 0.01 to 25 parts per 100 parts halogen-free flame-retardant filler.

4. Filler composition according to any one of Claims 1 to 3 **characterised in that** the quantity of organotitanatc and/or organozirconate is from 0.01 to 10 parts per 100 parts halogen-free flame-retardant filler.

5. Filler composition according to any one of Claims 1 to 4 **characterised in that** it comprises an organotitanate and/or an organozirconate in combination with a silane.

6. Filler composition according to Claim 5 **characterised in that** the quantity of silane is from 0.01 to 10 parts per 100 parts halogen-free flame retardant filler.

7. Filler composition according to any one of Claims 1 to 6 **characterised in that** the quantity of siloxane derivative is from 0.01 to 20 parts per 100 parts halogen-free flame retardant filler.

8. Filler composition according to any one of Claims 1 to 7 **characterised in that** the halogen-free flame-retardant filler comprises one or more hydroxides of aluminium and/or one or more hydroxides of magnesium, optionally mixed with one or more oxides of aluminium, of magnesium, of titanium, of silicon or of zirconium or with other filler materials.

9. Use of a surface-modified filler composition according to any one of Claims 1 to 8 as a halogen-free flame-retardant filler in a quantity from 5 wt.% to 90 wt.% in a thermoplastic, a thermoset or an elastomer.

10. Thermoplastic, thermoset or elastomer comprising a surface-modified filler composition according to any one of Claims 1 to 8.

## Revendications

1. Composition de charge pour matières synthétiques thermoplastiques, thermodurcissables ou élastomères, modifiée en surface, comprenant une charge non halogénée et retardatrice de combustion, traitée en surface par un ou plusieurs organo-titanate(s) et/ou organo-zirconate(s) et par un dérivé du siloxane.

2. Composition de charge selon la revendication 1, **caractérisée en ce qu'**elle contient en outre un dérivé de la mélamine et/ou un dérivé de la guanamine.

3. Composition de charge selon la revendication 2, **caractérisée en ce que** le dérivé de la mélamine et/ou le dérivé de la guanamine est présent en une quantité comprise entre 0,01 et 25 parties pour 100 parties de charge non halogénée et retardatrice de combustion.

4. Composition de charge selon l'une quelconque des revendications 1 à 3, **caractérisée en ce que** l'organo-titanate et/ou l'organo-zirconate est présent en une quantité comprise entre 0,01 et 10 parties pour 100 parties de charge non halogénée et retardatrice de combustion.

5. Composition de charge selon l'une quelconque des revendications 1 à 4, **caractérisée en ce que** l'organo-titanate et/ou l'organo-zirconate est présent en combinaison avec un silane.

6. Composition de charge selon la revendication 5, **caractérisée en ce que** le silane est présent en une quantité comprise entre 0,01 et 10 parties pour 100 parties de charge non halogénée et retardatrice de combustion.

7. Composition de charge selon l'une quelconque des revendications 1 à 6, **caractérisée en ce que** le dérivé du siloxane est présent en une quantité comprise entre 0,01 et 20 parties pour 100 parties de charge non halogénée et retardatrice de combustion.

8. Composition de charge selon l'une quelconque des revendications 1 à 7, **caractérisée en ce qu'**elle contient à titre de charge non halogénée et retardatrice de combustion un ou plusieurs hydroxyde(s) d'aluminium et/ou un ou plusieurs hydroxyde(s) de magnésium, éventuellement en mélange avec un ou plusieurs oxyde(s) d'aluminium, de magnésium, de titane, de silicium ou de zirconium ou avec d'autres matériaux de charge.

9. Utilisation d'une composition de charge modifiée en surface selon l'une quelconque des revendications 1 à 8, à titre de charge non halogénée et retardatrice de combustion en une quantité comprise entre 5 et 90 % en poids dans un thermoplastique, un thermodurcissable ou un élastomère.

10. Thermoplastique, thermodurcissable ou élastomère contenant une composition de charge modifiée en surface selon l'une quelconque des revendications 1 à 8.
